(19) Europäisches Patentamt / European Patent Office / Office européen des brevets

(11) **EP 4 769 552 A1**

(12) **EUROPEAN PATENT APPLICATION**
published in accordance with Art. 153(4) EPC

(43) Date of publication:
**01.07.2026 Bulletin 2026/27**

(21) Application number: **25738979.1**

(22) Date of filing: **09.01.2025**

(51) International Patent Classification (IPC):
$H01M\ 4/36^{(2006.01)}$   $H01M\ 4/58^{(2010.01)}$
$H01M\ 4/136^{(2010.01)}$   $H01M\ 4/62^{(2006.01)}$
$C01B\ 25/45^{(2006.01)}$   $H01M\ 10/052^{(2010.01)}$
$H01M\ 4/02^{(2006.01)}$

(52) Cooperative Patent Classification (CPC):
C01B 25/45; H01M 4/02; H01M 4/136; H01M 4/36;
H01M 4/58; H01M 4/62; H01M 10/052; Y02E 60/10

(86) International application number:
**PCT/KR2025/000471**

(87) International publication number:
**WO 2025/150906 (17.07.2025 Gazette 2025/29)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.01.2024 KR 20240003890**

(71) Applicant: **LG ENERGY SOLUTION, LTD.
Seoul 07335 (KR)**

(72) Inventor: **The designation of the inventor has not
yet been filed**

(74) Representative: **Hoffmann Eitle
Patent- und Rechtsanwälte PartmbB
Arabellastraße 30
81925 München (DE)**

(54) **POSITIVE ELECTRODE ACTIVE MATERIAL AND METHOD FOR PREPARING SAME**

(57) A positive electrode active material including a compound represented by Chemical Formula 1 having an olivine structure in the core is provided. The positive electrode active material including the compound represented by Chemical Formula 1may be manufactured by chemical vapor deposition (CVD) using a solid-state carbon source, providing a uniform porous carbon layer on the surface of the core.

【FIG. 1】

**Description**

[Technical Field]

The present disclosure relates to a positive electrode active material and a method for manufacturing the same.

This application claims the benefit of priority from Korean Patent Application No. 10-2024-0003890, filed on January 10, 2024, the entire contents disclosed therein are incorporated by reference into this disclosure.

[Background]

Recently, secondary batteries have been widely applied not only to small devices such as portable electronic devices, but also to medium and large-sized devices such as battery packs for hybrid vehicles or electric vehicles, or power storage devices. In particular, as interest in environmental issues has increased recently, much research is being conducted on electric vehicles, hybrid electric vehicles, etc. that can replace vehicles using fossil fuel such as gasoline vehicles, diesel vehicles, etc. which are one of the major causes of air pollution.

Generally, lithium secondary batteries have a structure in which an electrode assembly comprising a positive electrode, a negative electrode, and a separator is impregnated with a lithium electrolyte. In this case, each electrode is manufactured by coating an electrode slurry on a current collector. The electrode slurry is prepared by mixing an electrode active material for storing energy, a conductive material for providing electrical conductivity, and a binder for adhering them to the current collector and providing binding force between them in a solvent such as NMP (N-methyl pyrrolidone), etc.

The positive electrode includes a metal oxide, such as LCO ($LiCoO_2$), LMO ($LiMn_2O_4$), LFP ($LiFePO_4$), or NCM ($LiNi_{1/3}Co_{1/3}Mn_{1/3}O_2$), as a positive electrode active material capable of reversibly intercalating and deintercalating lithium.

Among these, compounds with a layered crystal structure, such as NCM-based compounds, LCO-based compounds, and NCA-based compounds are well-suited for lithium-ion storage and exhibit high lithium-ion diffusion rates, making them applicable as positive electrode active materials in high-capacity and high-power secondary batteries. However, compounds with a layered crystal structure have low chemical and structural stability, which can easily lead to decomposition under high temperature conditions. This reduces the safety of secondary batteries.

On the other hand, LFP-based compounds with an olivine crystal structure exhibit high structural stability with a hexagonal crystal form in which phosphorus (P) and oxygen (O) are strongly bonded. Therefore, LFP-based compounds with an olivine crystal structure can easily maintain their crystal structure even if lithium ions are completely deintercalated during charging, and the crystal structure does not easily decompose under high-temperature conditions. However, compounds with olivine crystal structure have low energy density, which represents the amount of energy that can be stored per unit weight/volume of the battery. Therefore, in order for compounds with olivine crystal structure to achieve high energy density, the weight/volume of the positive electrode active material must be increased, which causes the problem of excessive increase in the size or weight of the secondary battery. In addition, the LFP-based compounds have limitations in that their charge-discharge performance is significantly restricted due to low ionic diffusivity and electrical conductivity.

In response, conventional positive electrode active materials have been developed in the form of either containing metals such as manganese in LFP-based compounds with olivine crystal structure, or having particle surfaces coated with conductive materials, in order to increase energy density. In the former case, a structure where manganese is partially substituted at the position of iron atoms was implemented, resulting in an effect of improving the energy density of iron phosphate by about 5% or more. Despite this effect, additional energy density expression of LFP-based compounds applied to medium and large secondary batteries is required. In the latter case, although the electrical conductivity of the positive electrode active material may be somewhat improved due to the conductive layer on the surface, it is not only difficult to expect significantly improved electrical conductivity because uniform coating layer formation on the surface is not easy, but there is also a limitation that the lifespan performance of the positive electrode is poor.

Therefore, there is a demand for technology development for positive electrodes for lithium secondary batteries that can implement high energy density while including LFP-based compounds with an olivine structure as a positive electrode active material to implement high safety of lithium secondary batteries.

[Related Art Document]

[Patent Document]

   Korean Patent Application Publication No. 10-2013-0136796
   Korean Patent Application Publication No. 10-2016-0111213

[Summary]

[Technical Problem]

An object of the present disclosure is to provide a positive electrode for a lithium secondary battery that can implement a high energy density while including an LFP-based compound having an olivine structure as a positive electrode active material in order to implement a high safety of the lithium secondary battery, and a method for manufacturing the same.

[Technical Solution]

To solve the problems described above,
the present disclosure provides a positive electrode comprising:

a positive electrode current collector, and
a positive electrode active layer provided on at least one side of the positive electrode current collector and including a compound represented by the following Chemical Formula 1 as a positive electrode active material:

[Chemical Formula 1]     $Li_{1+a}Mn_{1-b-c}Fe_bM^1_cPO_4$

in the above Chemical Formula 1,
$M^1$ is one or more of Ti, V, Zr, Sr, Sb, B, and Nb, and
a, b, and c are $-0.5{\leq}a{\leq}0.5$, $0.1{\leq}b{\leq}0.8$, $0.001{\leq}c{\leq}0.2$.

In this case, the positive electrode active material may include one or more of the compounds represented by the following Chemical Formula 2, Chemical Formula 3, Chemical Formula 4, and Chemical Formula 5:

[Chemical Formula 2]     $Li_{1+a}Mn_{1-b-x}Fe_bTi_xPO_4$

[Chemical Formula 3]     $Li_{1+a}Mn_{1-b-x-y}Fe_bTi_xV_yPO_4$

[Chemical Formula 4]     $Li_{1+a}Mn_{1-b-x-y-z}Fe_bTi_xV_yNb_zPO_4$

[Chemical Formula 5]     $Li_{1+a}Mn_{1-b-x-y-z}Fe_bTi_xZr_yNb_zPO_4$

in the above Chemical Formula 2, Chemical Formula 3, Chemical Formula 4, and Chemical Formula 5,
a, b, x, y, and z are $-0.5{\leq}a{\leq}0.5$, $0.1{\leq}b{\leq}0.8$, $0<x{\leq}0.2$, $0<y{\leq}0.1$, $0<z{\leq}0.1$, provided that $0.001{\leq}x+y{\leq}0.2$ or $0.001{\leq}x+y+z{\leq}0.2$.

In addition, the positive electrode active material may have a lattice constant c of 4.69165 Å to 4.80 Å when analyzed by X-ray diffraction, and satisfy the following Equation 1:

$$[\text{Equation 1}]$$

$$y=-px+q,$$

in the above equation 1,

y represents the lattice constant c,

x represents $\sqrt{a^2 + b^2}$, wherein a and b are the lattice constants a and b, respectively, and
p and q are $-0.08{\leq}p{\leq}-0.07$ and $5{\leq}q{\leq}6$, respectively.

The average particle diameter ($D_{50}$) of the positive electrode active material may be $0.5{\mu}m$ to $10{\mu}m$, and the average thickness of the carbon layer may be 50 nm or less.
Furthermore, in one aspect, the present disclosure provides a method for manufacturing the positive electrode active material, comprising:

forming a carbon layer on the surface of particles of a compound represented by the following Chemical Formula 1, wherein the carbon layer is formed by chemical vapor deposition (CVD) under inactive gas conditions:

[Chemical Formula 1] $\quad\quad\quad Li_{1+a}Mn_{1-b-c}Fe_bM^1_cPO_4$

in the Chemical Formula 1,
$M^1$ is one or more selected from Ti, V, Zr, Sr, Sb, B, and Nb, and
a, b, and c are $-0.5 \leq a \leq 0.5$, $0.1 \leq b \leq 0.8$, $0.001 \leq c \leq 0.2$.

Here, the chemical vapor deposition (CVD) may use, as a carbon source one or more of a carbon structure containing one or more of a dot-shaped carbon compound and a linear carbon compound; and a polymer compound.
The dot-shaped carbon compound may include one or more selected from acetylene black, channel black, furnace black, lamp black, thermal black, and graphene, and the linear carbon compound may include one or more selected from carbon nanotube and carbon fiber.
Additionally, the polymer compound may include one or more selected from polyvinylpyrrolidone (PVP), polyacrylonitrile (PAN), polypyrrole (PPy), polyvinyl alcohol (PVA), polyacrylic acid (PAA), polymethylacrylate (PMA), and poly(methyl methacrylate) (PMMA).
Furthermore, the chemical vapor deposition (CVD) may be performed at a temperature of 500°C to 1,500°C.
Moreover, the present disclosure provides a positive electrode comprising:

a positive electrode current collector, and
a positive electrode active layer disposed on at least one side of the positive electrode current collector and including the positive electrode active material according to the present disclosure as described above.

[Advantageous Effects]

The positive electrode active material according to the present disclosure includes a compound represented by Chemical Formula 1 with an olivine structure in the core, resulting in high safety and excellent economic efficiency. In addition, the positive electrode active material includes a compound represented by Chemical Formula 1, not only having a large specific surface area of the core but also being manufactured by chemical vapor deposition (CVD) using a solid-state carbon source, which allows for a more uniform porous carbon layer on the surface of the core. Therefore, a positive electrode including this active material has the advantage of excellent output performance during charge and discharge and outstanding lifespan characteristics.

[Brief Description of the Drawings]

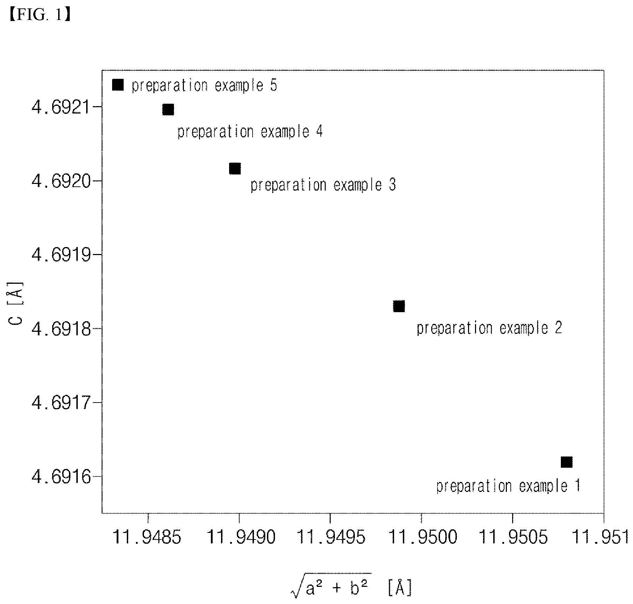

FIG. 1 is a graph showing the correlation between the lattice constant c and lattice constants a and b of a positive electrode active material in X-ray diffraction (XRD) analysis.

[Detailed Description]

The present disclosure may have various modifications and various aspects, and specific aspects will be described in detail in the following detailed description.
However, it should be understood that the present disclosure is not limited to the specific aspects, and includes all modifications, equivalents, or alternatives within the spirit and technical scope of the present disclosure.
The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.
In addition, in the present specification, "average particle diameter $(D_{50})$" refers to the particle diameter at which the cumulative value in the particle diameter distribution becomes 50%, and this is also called the median diameter. The average particle diameter can be measured by a method commonly applied in the art. For example, the average particle diameter can be measured using an analyzer such as a particle size analyzer or an analyzer using laser diffraction scattering particle size distribution measurement method, but is not limited thereto.
Hereinafter, the present disclosure will be described in more detail.

## Positive electrode active material

The present disclosure provides a positive electrode active material comprising:

a core including a compound represented by the following Chemical Formula 1, and
a carbon layer surrounding the core:

[Chemical Formula 1]     $Li_{1+a}Mn_{1-b-c}Fe_bM^1_cPO_4$

in the Chemical Formula 1,
$M^1$ is one or more selected from Ti, V, Zr, Sr, Sb, B, and Nb, and
a, b, and c are $-0.5 \leq a \leq 0.5$, $0.1 \leq b \leq 0.8$, $0.001 \leq c \leq 0.2$.

The positive electrode active material according to the present disclosure may refer to a positive electrode active material applied to a positive electrode for a lithium secondary battery. The positive electrode active material has a core-shell structure including a core that performs electrochemical reactions during charging and discharging of the lithium secondary battery, and a shell surrounding the surface of the core. Here, the core includes a compound represented by the Chemical Formula 1. The positive electrode active material according to the present disclosure includes a compound represented by Chemical Formula 1 with an olivine structure in the core, resulting in high safety and excellent economic efficiency. Additionally, the positive electrode active material has a high specific surface area of the core, allowing for a more uniform carbon layer on the surface. Accordingly, a positive electrode including this active material has the advantage of excellent output performance during charge-discharge and outstanding lifespan characteristics.

Specifically, the compound represented by Chemical Formula 1 included in the core has an olivine structure. The olivine structure has a hexahedral crystal form with strong bonding between phosphorus (P) and oxygen (O), exhibiting high structural stability. Therefore, the compound represented by Chemical Formula 1 can easily maintain its crystal structure even if all lithium ions are deintercalated during charging, and the decomposition of the crystal structure does not easily occur even under high-temperature conditions. As a result, the positive electrode active material including the compound represented by Chemical Formula 1 in the core has excellent lifespan characteristics and outstanding safety features in all aspects, including overcharge and overdischarge. Additionally, since the compound contains iron, which is abundant and inexpensive, it is less expensive than lithium composite oxides such as $LiNi_{1/3}Co_{1/3}Mn_{1/3}O_2$, $LiCoO_2$, $LiNiO_2$, or $LiMn_2O_4$, and it has lower toxicity, thus having less impact on the environment.

Furthermore, lithium manganese iron phosphate ($LiMn_{1-b}Fe_bPO_4$), which contains only lithium (Li), manganese (Mn), and iron (Fe) as metals, has a somewhat higher energy density compared to lithium iron phosphate ($LiFePO_4$), but the difference is not significant. However, the compound represented by Chemical Formula 1 applied in this disclosure can have a higher energy density by being doped and/or substituted with one or more metals. Specifically, the compound represented by Chemical Formula 1 may include a compound in which lithium manganese iron phosphate is doped and/or substituted with one or more of titanium (Ti), vanadium (V), zirconium (Zr), and niobium (Nb). For example, the compound represented by Chemical Formula 1 may include one or more of the compounds represented by the following Chemical Formula 2, Chemical Formula 3, Chemical Formula 4, and Chemical Formula 5:

[Chemical Formula 2]     $Li_{1+a}Mn_{1-b-x}Fe_bTi_xPO_4$

[Chemical Formula 3]     $Li_{1+a}Mn_{1-b-x-y}Fe_bTi_xV_yPO_4$

[Chemical Formula 4]     $Li_{1+a}Mn_{1-b-x-y-z}Fe_bTi_xV_yNb_zPO_4$

[Chemical Formula 5]     $Li_{1+a}Mn_{1-b-x-y-z}Fe_bTi_xZr_yNb_zPO_4$

in Chemical Formula 2, Chemical Formula 3, Chemical Formula 4, and Chemical Formula 5, a, b, x, y, and z are $-0.5 \leq a \leq 0.5$, $0.1 \leq b \leq 0.8$, $0 < x \leq 0.2$, $0 < y \leq 0.1$, $0 < z \leq 0.1$, provided that $0.001 \leq x+y \leq 0.2$ or $0.001 \leq x+y+z \leq 0.2$.

The compounds represented by Chemical Formula 2, Chemical Formula 3, Chemical Formula 4, and Chemical Formula 5 are lithium manganese iron phosphate ($LiMn_{1-b}Fe_bPO_4$) doped or substituted with titanium (Ti), vanadium (V), zirconium (Zr), and/or niobium (Nb). Here, the metals being doped or substituted can each be doped or substituted at 0.1 mole fraction or less based on the total 1 mole fraction of metals excluding lithium (Li), and the ratio (Li/Me) of lithium (Li) to these metals (Me) may be 1.01 to 1.50, specifically 1.01 to 1.30; 1.01 to 1.20; or 1.01 to 1.15. The concentration of lithium (Li) in the positive electrode active material is closely related to the density of the particles. Specifically, higher lithium concentration leads to higher density, which facilitates the removal of voids within the particles, enabling high rolling density. However, excessively high lithium concentration can reduce the mobility of lithium ions, resulting in decreased electrical performance. Also, significantly low lithium concentration leads to low particle density, resulting in low rolling density, as well as low energy density per unit volume/mass during positive electrode manufacturing. The present disclosure can overcome these problems by adjusting the ratio (Li/Me) of lithium (Li) to metals (Me) included in the positive electrode active material within the aforementioned range.

Such compounds represented by Chemical Formula 1 may include one or more of the compounds represented by Chemical Formula 2 such as $LiMn_{0.8}Fe_{0.19}Ti_{0.01}PO_4$, $LiMn_{0.7}Fe_{0.29}Ti_{0.01}PO_4$, $LiMn_{0.6}Fe_{0.39}Ti_{0.01}PO_4$, $LiMn_{0.8}Fe_{0.17}Ti_{0.03}PO_4$, $LiMn_{0.7}Fe_{0.27}Ti_{0.03}PO_4$, $LiMn_{0.6}Fe_{0.37}Ti_{0.03}PO_4$, $LiMn_{0.8}Fe_{0.15}Ti_{0.05}PO_4$, $LiMn_{0.7}Fe_{0.25}Ti_{0.05}PO_4$, $LiMn_{0.6}Fe_{0.35}Ti_{0.05}PO_4$; compounds represented by Chemical Formula 3 such as $LiMn_{0.8}Fe_{0.18}Ti_{0.01}V_{0.01}PO_4$, $LiMn_{0.7}Fe_{0.28}Ti_{0.01}V_{0.01}PO_4$, $LiMn_{0.6}Fe_{0.38}Ti_{0.01}V_{0.01}PO_4$, $LiMn_{0.8}Fe_{0.15}Ti_{0.025}V_{0.025}PO_4$, $LiMn_{0.7}Fe_{0.25}Ti_{0.025}V_{0.025}PO_4$, $LiMn_{0.6}Fe_{0.35}Ti_{0.025}V_{0.025}PO_4$, $LiMn_{0.8}Fe_{0.1}Ti_{0.05}V_{0.05}PO_4$, $LiMn_{0.7}Fe_{0.2}Ti_{0.05}V_{0.05}PO_4$, $LiMn_{0.6}Fe_{0.3}Ti_{0.05}V_{0.05}PO_4$; compounds represented by Chemical Formula 4 such as $LiMn_{0.8}Fe_{0.17}Ti_{0.01}V_{0.01}Nb_{0.01}PO_4$, $LiMn_{0.7}Fe_{0.27}Ti_{0.01}V_{0.01}Nb_{0.01}PO_4$, $LiMn_{0.6}Fe_{0.37}Ti_{0.01}V_{0.01}Nb_{0.01}PO_4$, $LiMn_{0.8}Fe_{0.12}Ti_{0.03}V_{0.025}Nb_{0.025}PO_4$, $LiMn_{0.7}Fe_{0.22}Ti_{0.03}V_{0.025}Nb_{0.025}PO_4$, $LiMn_{0.6}Fe_{0.32}Ti_{0.03}V_{0.025}Nb_{0.025}PO_4$, $LiMn_{0.8}Fe_{0.05}Ti_{0.05}V_{0.05}Nb_{0.05}PO_4$, $LiMn_{0.7}Fe_{0.15}Ti_{0.05}V_{0.05}Nb_{0.05}PO_4$, $LiMn_{0.6}Fe_{0.25}Ti_{0.05}V_{0.05}Nb_{0.05}PO_4$; and compounds represented by Chemical Formula 5 such as $LiMn_{0.8}Fe_{0.17}Ti_{0.01}Zr_{0.01}Nb_{0.01}PO_4$, $LiMn_{0.7}Fe_{0.27}Ti_{0.01}Zr_{0.01}Nb_{0.01}PO_4$, $LiMn_{0.6}Fe_{0.37}Ti_{0.01}Zr_{0.01}Nb_{0.01}PO_4$, $LiMn_{0.8}Fe_{0.12}Ti_{0.03}Zr_{0.025}Nb_{0.025}PO_4$, $LiMn_{0.7}Fe_{0.22}Ti_{0.03}Zr_{0.025}Nb_{0.025}PO_4$, $LiMn_{0.6}Fe_{0.32}Ti_{0.03}Zr_{0.025}Nb_{0.025}PO_4$, $LiMn_{0.8}Fe_{0.05}Ti_{0.05}Zr_{0.05}Nb_{0.05}PO_4$, $LiMn_{0.7}Fe_{0.15}Ti_{0.05}Zr_{0.05}Nb_{0.05}PO_4$, $LiMn_{0.6}Fe_{0.25}Ti_{0.05}Zr_{0.05}Nb_{0.05}PO_4$.

The compound represented by Chemical Formula 1 can have its particle size adjusted within a predetermined range according to the number and/or mole fraction of metals doped and/or substituted in lithium manganese iron phosphate. The core of the positive electrode active material may have a smaller size compared to lithium iron phosphate ($LiFePO_4$) or lithium manganese iron phosphate ($LiMn_{1-b}Fe_bPO_4$) by including lithium manganese iron phosphate doped and/or substituted with one or more metals. Accordingly, the core including the compound represented by Chemical Formula 1 has a larger specific surface area, allowing for a more uniform carbon layer to be provided on the core surface.

More specifically, as the types or mole fractions of metals being doped or substituted increase, the lattice constant c of the lithium manganese iron phosphate represented by Chemical Formula 1 may increase, and the grain may decrease.

In other words, the present disclosure is characterized by including a compound represented by Chemical Formula 1, in which one or more metals are doped or substituted in lithium manganese iron phosphate, in the core, thereby allowing for finer core size with larger specific surface area, and consequently including a more uniformly coated carbon layer on the core surface.

Here, the crystallite size of the compound represented by Chemical Formula 1 can be measured in the form of lattice constants a, b, c, etc., which represent the length of each side of the crystallite during X-ray spectroscopy analysis. Here, "particle" refers to a grain at the micrometer level, which, when observed under magnification, can be divided into "grains" with crystals at the tens of nanometers level. When the grain is further magnified, a unit area (i.e., crystal lattice) where atoms form a lattice structure in a certain direction can be identified, which is called a "crystallite."

As an example, the compound represented by Chemical Formula 1 according to the present disclosure may have a larger lattice constant c than the lattice constant c (approximately 4.6916 Å) of lithium manganese iron phosphate ($LiMn_{1-b}Fe_bPO_4$) that does not contain the transition metal, as it is doped or substituted with titanium (Ti), vanadium (V), zirconium (Zr), and/or niobium (Nb) along with manganese (Mn). For instance, the positive electrode active material may have a lattice constant c of 4.69165 Å to 4.80 Å when analyzed by X-ray diffraction. Specifically, the positive electrode active material may have a lattice constant c of 4.69165 Å to 4.80 Å; 4.69165 Å to 4.75 Å; 4.69165 Å to 4.70 Å; 4.69165 Å to 4.695 Å; 4.69165 Å to 4.694 Å; 4.69165 Å to 4.693 Å; 4.6917 Å to 4.6925 Å; or 4.6918 Å to 4.6925 Å when analyzed by X-ray diffraction.

"Lattice constant" refers to a value representing the edge length of a crystallite, which is used to describe the size and arrangement of a material, and can be expressed in various forms depending on the crystal structure. In the case of an olivine structure, it has an orthorhombic crystal structure, and accordingly, it can have lattice constants a, b, and c. Among these, the lattice constant c is a factor representing the unit cell size in the c-axis direction of the crystal, and is closely related to the structural and chemical properties of the crystallite. For example, in the case of lithium manganese iron phosphate ($LiMn_{1-b}Fe_bPO_4$) with an olivine structure, the c-axis direction can act as the main pathway for lithium ion movement. The lattice constant c, which represents the size in the c-axis direction, can increase when $Ti^{4+}$, $V^{5+}$, $Nb^{5+}$, etc., which have larger ionic radii than $Fe^{2+}$ and $Mn^{2+}$, are doped. The increase in the lattice constant c can expand the lithium ion pathway, increasing the diffusion coefficient of lithium ions. Therefore, the positive electrode active material according to the present disclosure may have excellent electrical performance in the aforementioned range of lattice constant c. However, when the upper limit of the range is exceeded, a secondary phase may form inside the olivine structure. When a secondary phase forms inside the olivine structure, electrochemical activity may actually decrease. Also, when it is below the lower limit of the range, the electrical performance of the positive electrode active material may be significantly reduced.

Additionally, the compound represented by Chemical Formula 1 may show a linear relationship when the lattice constant c is expressed in relation to the lattice constants a and b, which can follow Vegard's law. Specifically, the lattice constant c may have a certain correlation with the square root of (the sum of the square of lattice constant a and the square of lattice constant b), and such correlation can be expressed by the following Equation 1:

$$[\text{Equation } 1]$$

$$y=-px+q$$

in the above Equation 1,

y represents the lattice constant c,

x represents $\sqrt{a^2 + b^2}$, wherein a and b are the lattice constants a and b, respectively, and

p and q are $-0.08 \leq p \leq -0.07$ and $5 \leq q \leq 6$, respectively.

Equation 1 shows the correlation between the lattice constants a and b and the lattice constant c of the lithium manganese iron phosphate represented by Chemical Formula 1. The lattice constants a, b, and c and their correlation can vary depending not only on the type or mole fraction of metals being doped and/or substituted but also on the manufacturing method or process conditions. In the case of the present disclosure, as shown in FIG. 1, it tends to increase as the number or mole fraction of metals doped and/or substituted in lithium manganese iron phosphate increases. In other words, the positive electrode active material of the present disclosure satisfies the range of lattice constant c as described above, and since the lattice constant c tends to increase as the number or mole fraction of metals ($M^1$) doped and/or substituted in lithium manganese iron phosphate ($LiMn_{1-b}Fe_bPO_4$) increases, it can satisfy Equation 1. The fact that the lattice constant c shows a linear relationship when expressed in relation to the lattice constants a and b means that the olivine crystal structure can be maintained even if a plurality of components (e.g., Ti, V, Zr, Sr, Sb, B, Nb, etc.) is doped or substituted in lithium manganese iron phosphate ($LiMn_{1-b}Fe_bPO_4$). In other words, it indirectly indicates that the structural safety of the positive electrode active material according to the present disclosure is maintained at a high level even when a plurality of components is doped or substituted.

The grain formed by such lattice units can be identified for size through the X-axis size during X-ray diffraction analysis. The grain size may be about 70 nm or more and less than 120 nm. More specifically, the grain size may be about 70 nm to 115 nm; about 70 nm to 105 nm; about 70 nm to 99 nm; about 70 nm to 95 nm; or about 80 nm to 99 nm.

The positive electrode active material according to the present disclosure can increase the specific surface area of the core while minimizing inter-particle agglomeration by adjusting the grain size of the compound represented by Chemical Formula 1 included in the core to the aforementioned range. Through this, the positive electrode active material can have a more uniform carbon layer on the core surface, thereby further improving the electrical properties of the positive electrode including it. The grain is a particle formed by the aggregation of crystallites, and generally, as the size of the crystallites increases, the size of the grain can increase. However, in the case of the positive electrode active material according to the present disclosure, where a plurality of components is doped or substituted, lattice interference effects can occur. In this case, structural changes in the crystallite boundaries may be induced or the crystallite boundaries may increase, so the tendency for increased crystallite size to increase grain size may not appear.

Meanwhile, the carbon layer of the positive electrode active material has a structure that uniformly surrounds the surface of the core. Here, the carbon layer can have a porous structure with a high surface area, as well as a form that uniformly surrounds the core surface with high crystallinity. This structure of the carbon layer can further enhance the electrochemical reactivity and electrical properties of the positive electrode active material, thereby improving the output and lifespan characteristics of the positive electrode active material.

Here, the thickness of the carbon layer can be adjusted within a range that does not reduce the energy density of the positive electrode active material. Specifically, the carbon layer may have an average thickness of 50 nm or less. More specifically, the carbon layer may have an average thickness in the range of 40 nm or less; 30 nm or less; 20 nm or less; 10 nm or less; 5 nm to 40 nm; 5 nm to 20 nm; 10 nm to 30 nm; 20 nm to 45 nm; 10 nm to 20 nm; 5 nm to 10 nm; 1 nm to 10 nm; or 3 nm to 9 nm.

Furthermore, the positive electrode active material including the aforementioned core and carbon layer can have a certain size. For example, the positive electrode active material may have an average particle diameter ($D_{50}$) in the range of 0.5 $\mu$m to 10 $\mu$m, and specifically may be in the range of 0.5 $\mu$m to 8 $\mu$m; 0.5 $\mu$m to 6 $\mu$m; 0.5 $\mu$m to 4 $\mu$m; 0.5 $\mu$m to 2 $\mu$m; 1 $\mu$m to 5 $\mu$m; 2 $\mu$m to 4 $\mu$m; 4 $\mu$m to 8 $\mu$m; 5 $\mu$m to 9 $\mu$m; 3 $\mu$m to 6 $\mu$m; 0.5 $\mu$m to 1.5 $\mu$m; or 0.7 $\mu$m to 1.4 $\mu$m.

The present disclosure can prevent the agglomeration of positive electrode active materials, which would reduce the processability during positive electrode manufacturing and lower the reliability of the positive electrode, by adjusting the average particle diameter ($D_{50}$) of the positive electrode active material to the aforementioned range to prevent diameters lower than the lower limit of the range. Also, there is a problem that damage to the positive electrode active material, such as breakage during the rolling process, occurs due to a particle diameter higher than the upper limit of the aforementioned range, resulting in reduced electrical performance.

The positive electrode active material according to the present disclosure has high structural safety and economic efficiency by having the aforementioned configuration. Additionally, the positive electrode active material has a high specific surface area of the core by including the compound represented by Chemical Formula 1 in the core, allowing for a more uniform carbon layer on the surface. Therefore, a positive electrode including this has the advantage of excellent output performance during charge-discharge and outstanding lifespan characteristics.

## Method for Manufacturing Positive Electrode Active Material

Furthermore, the present disclosure provides a method for manufacturing the aforementioned positive electrode active material, comprising:

forming a carbon layer on the surface of particles of a compound represented by the following Chemical Formula 1, wherein the carbon layer is formed by chemical vapor deposition (CVD) under inactive gas conditions:

[Chemical Formula 1]  $\quad\quad\quad Li_{1+a}Mn_{1-b-c}Fe_bM^1_cPO_4$

in the Chemical Formula 1,
$M^1$ is one or more selected from Ti, V, Zr, Sr, Sb, B, and Nb, and
a, b, and c are $-0.5 \leq a \leq 0.5$, $0.1 \leq b \leq 0.8$, $0.001 \leq c \leq 0.2$.

The method for manufacturing the positive electrode active material according to the present disclosure refers to a method for manufacturing the positive electrode active material as described above. The method for manufacturing the positive electrode active material according to the present disclosure includes a process of forming a carbon layer on the surface of particles of the compound represented by Chemical Formula 1, which is the core.

Here, the core on which the carbon layer is provided can be manufactured through a certain process. The manufacturing process of the core includes a process of producing a compound represented by Chemical Formula 1, and the compound represented by Chemical Formula 1 can be manufactured by a step of calcining a mixture of a compound represented by Chemical Formula 6 and metal precursor compounds at a temperature of 500°C or higher, more specifically at 500°C to 1,000°C; 500°C to 900°C; 500°C to 800°C; or 500°C to 750°C:

[Chemical Formula 6]  $\quad\quad\quad Li_{1+m}Mn_{1-n}Fe_nPO_4$

In the Chemical Formula 6,
m and n are $-0.5 \leq m \leq 0.5$, $0.1 \leq n \leq 0.8$.

Generally, conventional metal compounds with olivine structure are manufactured by mixing a lithium phosphate compound, which is a lithium raw material, and precursor compounds each containing transition metals other than lithium, and calcining this mixture at high temperature. However, in the present disclosure, the compound represented by Chemical Formula 1 can be manufactured by first forming a lithium manganese iron phosphate represented by Chemical Formula 6 through calcination of a mixture of a manganese precursor compound, an iron precursor compound, and a lithium phosphate compound, and subsequently mixing and calcining precursor compounds of metals to be doped and/or substituted into the generated lithium manganese iron phosphate.

Here, the compound represented by Chemical Formula 6 can be preliminarily heat-treated at 500°C to 900°C for 0.1 hours to 20 hours before being mixed with the metal precursor compounds. Specifically, the compound represented by Chemical Formula 6 can undergo a pre-calcination process for 1 hour to 6 hours; or 1 hour to 3 hours before being mixed with the metal precursor compounds. Here, the pre-calcination process temperature can be 500°C to 800°C; or 550°C to 750°C.

The present disclosure can significantly reduce the moisture content in the lithium manganese iron phosphate by performing heat treatment of the lithium manganese iron phosphate represented by Chemical Formula 6 under the aforementioned conditions before mixing with the metal precursor compounds. Through this, metals contained in the metal precursor compounds can be easily doped into the lithium manganese iron phosphate or substituted at the iron atom positions. However, at temperatures lower than the aforementioned temperature range, there is a limitation that moisture in the lithium manganese iron phosphate is not sufficiently removed, and at temperatures higher than the aforementioned temperature range, the crystallinity of the lithium manganese iron phosphate may increase, making doping and/or substitution of metals rather difficult.

The heat-treated compound of Chemical Formula 6 can be mixed with metal precursor compounds and sintered, thereby producing the compound represented by chemical formula 1. Here, the metal precursor compounds refer to raw materials that supply titanium (Ti), vanadium (V), zirconium (Zr), niobium (Nb), etc., to the lithium manganese iron phosphate represented by Chemical Formula 6. The metal precursor compounds are not particularly limited as long as they can provide titanium (Ti), vanadium (V), zirconium (Zr), and/or niobium (Nb).

Preferably, the titanium (Ti) precursor compound may include one or more selected from titanium oxide or titanium alkoxide containing titanium (Ti) as a component. For example, the titanium (Ti) precursor compound may include titanium oxides such as $TiO$, $TiO_2$, or titanium alkoxides such as $Ti[OCH(CH_3)_2]_4$, but is not limited thereto.

Also, the vanadium (V) precursor compound may be a vanadium-containing oxide, a vanadium-containing ammonium salt, or a combination thereof. For example, the vanadium (V) precursor compound may include vanadium oxides such as $VO_2$, $V_2O_3$, $V_2O_5$, or ammonium vanadate ($NH_4VO_3$), but is not limited thereto.

The zirconium (Zr) precursor compound may be a zirconium-containing oxide, a zirconium-containing acetate, or a combination thereof. For example, the zirconium (Zr) precursor compound may include zirconium oxides such as $ZrO_2$, or compounds such as $Zr_6O_4(OH)_4(O_2CCH_3)_{12}$, but is not limited thereto.

Furthermore, the niobium (Nb) precursor compound may be a niobium-containing acetate, nitrate, sulfate, halide, sulfide, hydroxide, oxide, oxyhydroxide, or a combination thereof. For example, the niobium (Nb) precursor compound may include niobium oxides such as $NbO$, $NbO_2$, $Nb_2O_5$; niobium salts such as $NbCO_3$, $Nb(NO_3)_2$, $NbSO_4$, niobium acetate, niobium dicarboxylate salt, niobium citrate, niobium fatty acid salt; niobium oxyhydroxide; niobium chloride; or combinations thereof, but is not limited thereto.

Additionally, the method for manufacturing the positive electrode active material according to the present disclosure can perform chemical vapor deposition (CVD) under inactive gas conditions to uniformly coat a carbon layer on the core including the compound represented by Chemical Formula 1.

Chemical Vapor Deposition (CVD) refers to a method of depositing vaporized raw materials as a thin film on a substrate injected into a reactor under vacuum or inactive gas conditions. The present disclosure has the advantage of being able to form a thin carbon layer more uniformly on the core including the compound represented by Chemical Formula 1 by using such chemical vapor deposition (CVD).

Here, the chemical vapor deposition (CVD) can be performed under conditions where the inside of the reactor is substituted with an inactive gas such as nitrogen gas, argon gas, or helium gas, in order to prevent the influx of impurities into the carbon layer during carbon layer deposition and to prevent side reactions from occurring on the carbon layer surface.

Additionally, the chemical vapor deposition (CVD) can be performed with hydrogen gas partially mixed in the reactor filled with inactive gas during deposition. For example, the chemical vapor deposition (CVD) can perform a primary deposition while supplying argon gas at a flow rate of 150 sccm to 250 sccm into a reactor interior substituted with argon gas, and subsequently perform a secondary deposition by continuously supplying hydrogen gas at a flow rate of 10 sccm to 20 sccm together with argon gas at a flow rate of 250 sccm to 350 sccm to the reactor. In this case, carbon seeds for carbon layer deposition are generated during the primary deposition, and the growth of the generated carbon seeds can be promoted during the secondary deposition.

The chemical vapor deposition (CVD) can be performed within 100 minutes, and specifically can be performed for 1 minute to 100 minutes; 1 minute to 75 minutes; 1 minute to 50 minutes; 1 minute to 30 minutes; 1 minute to 20 minutes; 1 minute to 10 minutes; or 10 minutes to 70 minutes.

Also, as described above, when hydrogen gas is mixed during deposition, the primary deposition can be performed for within 30 minutes, followed by secondary deposition for 30 minutes to 70 minutes.

As one example, the chemical vapor deposition (CVD) can perform primary deposition under inactive gas conditions for 10 minutes, followed by secondary deposition under conditions where hydrogen gas is partially mixed with inactive gas for 30 minutes to 40 minutes.

The present disclosure can effectively control the thickness of the carbon layer on the core surface by adjusting the chemical vapor deposition (CVD) performance time to the aforementioned range.

Furthermore, the chemical vapor deposition (CVD) can be performed at high-temperature conditions for vaporizing the carbon source for forming the carbon layer. Specifically, the chemical vapor deposition (CVD) performance temperature may be 500°C to 1,500°C, and more specifically may be 500°C to 1,300°C; 500°C to 1,100°C; 500°C to 1,000°C; 500°C to 900°C; 600°C to 1,300°C; 800°C to 1,100°C; 1,000°C to 1,500°C; 750°C to 990°C; or 600°C to 900°C.

The present disclosure can not only uniformly form a carbon layer on the core by controlling the chemical vapor deposition (CVD) temperature to the aforementioned range, but also convert the carbon deposited on the core surface into a carbon layer with high crystallinity. A carbon layer with high crystallinity can significantly enhance the electrical properties of the positive electrode active material, such as electrical conductivity, thus providing the advantage of improving the output performance of the positive electrode during charging and discharging of the secondary battery.

As an example, the positive electrode active material according to the present disclosure includes a carbon layer deposited by chemical vapor deposition (CVD) in the aforementioned temperature range, such that during Raman spectroscopy analysis, the area of the peak appearing at 1580±50 cm$^{-1}$ may be larger than the area of the peak appearing at 1360±50 cm$^{-1}$.

In Raman spectroscopy analysis, the peaks appearing at 1360±50 cm$^{-1}$ and 1580±50 cm$^{-1}$, respectively, are peaks observed in carbon compounds such as graphite, carbon black, graphene, and carbon nanotubes (CNT). Among these, the peak appearing at 1360±50 cm$^{-1}$ is a peak that appears when inelastic scattering by phonons and elastic scattering around defect/substitution points in the carbon compound occur during Raman spectroscopy analysis, indicating that the larger the intensity and/or area ratio of the peak, the more defects or substitutions the compound has in its structure, and the lower the crystallinity. In contrast, the peak appearing at 1580±50 cm$^{-1}$ is a peak due to first-order Raman scattering, indicating that the higher the intensity and/or area ratio of the peak, the higher the crystallinity. In other words, the positive electrode active material according to the present disclosure has a larger area of the peak representing the crystallinity of carbon contained in the carbon layer than the area of the peak representing the non-crystallinity of the carbon compound during Raman spectroscopy analysis, indicating that the carbon layer has high crystallinity.

In this case, the carbon coating layer can have a ratio of the area of the peak appearing at 1360±50 cm$^{-1}$ to 30% to 90% of the area of the peak appearing at 1580±50 cm$^{-1}$, and more specifically may have a ratio of 50% to 90%; 60% to 90%; 70% to 90%; 60% to 85%; or 55% to 80%.

Furthermore, the chemical vapor deposition (CVD) can be performed using a solid-state carbon source. Specifically, the chemical vapor deposition (CVD) can use a carbon structure including one or more of a dot-shaped carbon compound and a linear carbon compound, and a polymer compound as the carbon source, either individually or in combination.

More specifically, the dot-shaped carbon compound may include one or more selected from acetylene black, channel black, furnace black, lamp black, thermal black, and graphene. Also, the linear carbon compound may include one or more selected from carbon nanotube and carbon fiber.

In addition, the polymer compound may include one or more selected from polyvinylpyrrolidone (PVP), polyacrylonitrile (PAN), polypyrrole (PPy), polyvinyl alcohol (PVA), polyacrylic acid (PAA), polymethylacrylate (PMA), and poly(methyl methacrylate) (PMMA).

As one example, the carbon source may be a dot-shaped carbon compound, and the dot-shaped carbon compound may include acetylene black.

As another example, the carbon source may include a dot-shaped carbon compound and a linear carbon compound. Here, the dot-shaped carbon compound may include acetylene black, and the linear carbon compound may include carbon nanotubes (CNT). Also, in this case, the dot-shaped carbon compound and the linear carbon compound may be included in a weight ratio of 1:10 to 10:1, and specifically may be included in a weight ratio of 1:5 to 5:1, 1:3 to 3:1, 1:2 to 2:1, 1:5 to 1:1.5, 1:1.5 to 1.5, or 1:1.5 to 1.5:1.

As yet another example, the carbon source may include a dot-shaped carbon compound, a linear carbon compound, and a polymer compound. Here, the dot-shaped carbon compound may include acetylene black, the linear carbon compound may include carbon nanotubes (CNT), and the polymer compound may include polyvinylpyrrolidone (PVP). In this case, the linear carbon compound and the polymer compound may each be included in 10~90 parts by weight based on 100 parts by weight of the dot-shaped carbon compound, and specifically may each be included in 10 to 80 parts by weight; 10 to 70 parts by weight, 10 to 60 parts by weight, 10 to 50 parts by weight, 10 to 40 parts by weight, 30 to 70 parts by weight, 60 to 80 parts by weight, or 20 to 40 parts by weight based on 100 parts by of the dot-shaped carbon compound.

Conventional chemical vapor deposition (CVD) for forming a carbon layer has been performed using hydrocarbon gases such as methane ($CH_4$) gas, ethane ($CH_3CH_3$) gas, propane ($CH_3CH_2CH_3$) gas, ethylene ($CH_2CH_2$) gas, and acetylene (CHCH) gas. In this case, it can be performed at a lower temperature as no process is required for gasification of the carbon source. However, there is a limitation that it is not easy to control the gaseous carbon source during deposition, and due to the high reactivity of the carbon source, side reactions are induced on the core surface, reducing the activity of the positive electrode active layer. Also, the formed carbon layer forms a non-crystalline amorphous layer with low crystallinity, so it does not have a large specific surface area. However, the present disclosure not only has high workability during deposition using a solid-state carbon source, but also has excellent electrical properties such as electrical conductivity because of the high crystallinity of the carbon layer. In particular, when using a polymer compound such as polyvinylpyrrolidone (PVP) as the carbon source, a carbon layer with a porous structure can be formed, allowing for the formation of a carbon layer with a high surface area on the core surface. In this case, the ion transfer capability of the carbon layer increases, improving the lithium diffusion coefficient, so the manufactured positive electrode active material exhibits excellent output performance.

The method for manufacturing the positive electrode active material according to the present disclosure can manufacture a positive electrode active material with a uniformly coated carbon layer on the core including the compound represented by Chemical Formula 1 by having the aforementioned configuration. Additionally, the positive electrode active material manufactured accordingly not only has high structural safety but also has the advantages of excellent output performance during charging and discharging and outstanding lifespan characteristics.

## Positive electrode

Furthermore, the present disclosure provides a positive electrode comprising:

a positive electrode current collector, and
a positive electrode active layer disposed on at least one side of the positive electrode current collector and including the positive electrode active material according to the present disclosure as described above.

The positive electrode according to the present disclosure includes a positive electrode active layer disposed on at least one side of the positive electrode current collector. Here, the positive electrode active layer is a layer that implements the electrical activity of the positive electrode, and mainly includes the positive electrode active material that implements electrochemical redox reactions during battery charging and discharging. Specifically, the positive electrode active material may be included in 80 parts by weight to 99.8 parts by weight based on the total weight of the positive electrode active layer, and specifically may be included in 95 parts by weight or more, 98 parts by weight or more, 84 parts by weight to 99.8 parts by weight, 90 parts by weight to 99.8 parts by weight, 94 parts by weight to 99.8 parts by weight, 88 parts by weight to 96 parts by weight, or 92 parts by weight to 97.5 parts by weight.

Also, since the positive electrode active material has the same configuration as the positive electrode active material according to the present disclosure as explained above, a detailed explanation is omitted.

Meanwhile, the positive electrode active layer may selectively further include a conductive material, a binder, and other additives along with the main component, the positive electrode active material.

Here, the conductive material may include one or more of acetylene black, channel black, furnace black, lamp black, thermal black, graphene, carbon nanotube, and carbon fiber, but is not limited thereto.

The content of the conductive material may be 0.1 to 10 parts by weight based on the total 100 parts by weight of the electrode active layer, and specifically may be 0.1 to 8 parts by weight, 0.1 to 5 parts by weight, 0.1 to 3 parts by weight, 2 to 6 parts by weight, or 0.5 to 2 parts by weight. The present disclosure can prevent the decrease in charging capacity due to increased electrode resistance resulting from a low content of conductive material, and can prevent problems such as decreased charging capacity due to reduced content of electrode active material or decreased rapid charging characteristics due to increased loading amount of the electrode active layer resulting from an excessive amount of conductive material by controlling the content of the conductive material to the aforementioned range.

Additionally, the binder, as a component that assists in the binding of the positive electrode active material and the conductive material, etc., and the binding to the current collector, can be appropriately applied within a range that does not deteriorate the electrical properties of the positive electrode, but specifically may include any one or more of polyvinylidene fluoride-hexafluoropropylene copolymer (PVDF-co-HFP), polyvinylidenefluoride (PVdF), polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorine rubber.

The content of the binder may be 0.1 to 10 parts by weight based on the total 100 parts by weight of the positive electrode active layer, and specifically may be 0.1 to 8 parts by weight, 0.1 to 5 parts by weight, 0.1 to 3 parts by weight, or 2 to 6 parts by weight. The present disclosure can prevent the deterioration of the adhesion of the active layer due to a low content of binder or the deterioration of the electrical properties of the positive electrode due to an excessive amount of binder by controlling the content of the binder contained in the positive electrode active layer to the aforementioned range.

Furthermore, the average thickness of the positive electrode active layer may be 50 $\mu$m to 500 $\mu$m. Specifically, the average thickness of the positive electrode active layer may be 100 $\mu$m to 400 $\mu$m; 200 $\mu$m to 350 $\mu$m; 50 $\mu$m to 180 $\mu$m; 80 $\mu$m to 150 $\mu$m; 100 $\mu$m to 250 $\mu$m; or 130 $\mu$m to 190 $\mu$m. The present disclosure can not only implement high adhesion between the positive electrode active layer and the positive electrode current collector but also implement high energy density of the positive electrode by adjusting the average thickness of the positive electrode active layer to the above range.

Furthermore, the positive electrode current collector can use something that has high conductivity without inducing chemical changes in the battery. For example, stainless steel, aluminum, nickel, titanium, sintered carbon, etc., can be used, and in the case of aluminum or stainless steel, those surface-treated with carbon, nickel, titanium, silver, etc., can also be used. Additionally, the average thickness of the current collector can be appropriately applied from 3 $\mu$m to 500 $\mu$m considering the conductivity and total thickness of the manufactured positive electrode.

The positive electrode for lithium secondary batteries according to the present disclosure has the advantages of excellent safety and lifespan characteristics by having the above configuration.

Hereinafter, the present disclosure is described in more detail through examples and comparative examples.

However, the following examples and comparative examples merely illustrate the present disclosure, and the content of the present disclosure is not limited to the following examples and comparative examples.

**Preparation Examples 1 to 5. Manufacture of core for positive electrode active material**

First, a compound represented by Chemical Formula 1 to be used as the core of the positive electrode active material was manufactured. For this purpose, lithium manganese iron phosphate ($LiMn_{0.7}Fe_{0.3}PO_4$) was purchased commercially. The purchased lithium manganese iron phosphate was heat-treated at 700°C for 1 hour, then mixed with titanium dioxide ($TiO_2$), ammonium vanadate ($NH_4VO_3$), and niobium oxide ($Nb_2O_5$), and calcined at $700\pm20$°C under a nitrogen atmosphere to produce a compound powder represented by Chemical Formula 1. Here, the mixing amount of titanium dioxide ($TiO_2$), ammonium vanadate ($NH_4VO_3$), and niobium oxide ($Nb_2O_5$) was adjusted to satisfy Table 1 for the mole fraction of metals contained in the metal precursor compounds based on a mole fraction of 1 for all metals excluding lithium in the manufactured compound.

X-ray diffraction (XRD) was performed on the manufactured compound powder to measure (1) lattice constants a, b, c and (2) X-axis size representing grain size. Specifically, X-ray diffraction spectroscopy analysis was performed by the Rietveld refinement method considering the metals doped and/or substituted in lithium manganese iron phosphate ($LiMn_{0.7}Fe_{0.3}PO_4$). Here, the X-ray diffraction analysis used Bruker D8 Endeavor (Cu-K$\alpha$, $\lambda$=1.54Å) equipped with a LynxEye XE-T position sensitive detector or LynxEye position sensitive detector, and the sample was placed in the groove of a general powder holder. After that, the sample surface was made even using a slide glass, and the sample height was filled to match the edge of the holder, then measured with FDS 0.5°, $2\theta$=15°~90° area, step size=0.02°, total scan time=about 20 minutes. For crystallite size analysis, instrumental broadening was considered using the Fundamental Parameter Approach (FPA) built into the Bruker TOPAS program, and all peaks in the measurement range were used for fitting. The peak shape used FP (first principle) among the peak shapes available in TOPAS, using Lorentzian contribution for fitting. Strain was not considered at this point. The measured lattice constant c and crystallite size (i.e., X-axis size) are shown in Table 1, and the correlation between lattice constant c and lattice constants a and b is shown in FIG. 1. Referring to FIG. 1, it was confirmed that when lattice constant c is expressed in relation to lattice constants a and b, it shows a linear relationship, and as the concentration of lithium (Li) in the structure increases, it tends towards the lower right. Also, it was confirmed that as the types of metals doped and/or substituted in the positive electrode active material increase, a linear relationship appears, following Vegard's law.

Additionally, particle size distribution (PSD) analysis was performed on each of the manufactured cores to measure the $D_{50}$ of the core. Specifically, particle size distribution (PSD) was performed by the laser diffraction method. The particle size distribution (PSD) device used was Malvern's Mastersizer 3000, and the laser refractive index was adjusted to 2.0 to 2.2. Less than 1g of each core was dispersed in deionized water (D.I. water) using an ultrasonic irradiator mounted inside the device, and then the particle size distribution was calculated by measuring the difference in diffraction patterns according to particle size when the dispersed particles pass through the laser beam. Here, $D_{50}$ was measured by calculating the particle diameter at the point where 50% of the area cumulative distribution by particle size in the measuring device is reached. The measured results are shown in Table 1 below.

[Table 1]

| | | Preparation Example 1 | Preparation Example 2 | Preparation Example 3 | Preparation Example 4 | Preparation Example 5 |
|---|---|---|---|---|---|---|
| Metal precursor compound | $TiO_2$ | - | 0.06 | 0.03 | 0.02 | 0.02 |
| | $NH_4VO_3$ | - | - | 0.03 | 0.02 | 0.02 |
| | $Nb_2O_5$ | - | - | - | 0.02 | 0.02 |
| Pre-heat treatment before mixing metal precursor compounds (700°C. 1 hour) | | X | X | X | X | O |
| XRD | Lattice constant c | 4.69162 Å | 4.69184 Å | 4.69202 Å | 4.69209 Å | 4.69214 Å |
| | X-axis size | 120nm | 100nm | 96nm | 91nm | 88nm |
| Average particle diameter($D_{50}$) | | 1.40$\mu$m | 1.20$\mu$m | 1.03$\mu$m | 0.90$\mu$m | 0.81$\mu$m |

**Examples 1 to 10 and Comparative Example 1. Manufacture of positive electrode active material**

In the preparation example, core particles for positive electrode active material were introduced into a reactor of a chemical vapor deposition, and the inside of the reactor was substituted with argon gas. Then, the inside of the reactor was heated to 800°C at a heating rate of 50°C/min, and chemical vapor deposition was performed for 15 minutes to 20 minutes while supplying argon gas at 180 sccm to 220 sccm. Subsequently, chemical vapor deposition was additionally performed for 25 minutes to 35 minutes while continuously supplying hydrogen gas and argon gas at 10 sccm to 20 sccm and 280 sccm to 320 sccm, respectively, to manufacture a positive electrode active material for lithium secondary batteries with a carbon layer formed on the core surface.

Here, (1) the types of cores applied are shown in Table 2 below. Also, the carbon sources used during chemical vapor deposition were acetylene black (AB), carbon nanotubes (CNT), and polyvinylpyrrolidone (PVP) particles as dot-shaped carbon compound, linear carbon compound, and polymer compound, respectively. The carbon source was used to account for 4~6 weight percent of the total weight of the positive electrode active material, and (2) the weight ratio of dot-shaped carbon compound, linear carbon compound, and polymer compound included as the carbon source is shown in Table 2 below.

Particle size distribution (PSD) analysis was performed on each manufactured positive electrode active material to measure the $D_{50}$ of the positive electrode active material. Here, the $D_{50}$ of the positive electrode active material was measured by performing the same method as the method for measuring the $D_{50}$ of the core earlier.

The measured results are shown in Table 2 below.

Furthermore, transmission electron microscope (TEM) analysis was performed on the manufactured positive electrode active materials to measure the average thickness of the carbon layer provided on the core surface. As a result, it was confirmed that the average thickness of the carbon layer formed on the core surface was about 5 nm to 10nm.

[Table 2]

| | Type of core | Content ratio of each carbon source [wt.%] | | | $D_{50}$ of positive electrode active material |
|---|---|---|---|---|---|
| | | AB | CNT | PVP | |
| Comparative Example 1 | Core of Preparation Example 1 | 50 | 35 | 15 | About 1.8 $\mu$m |
| Example 1 | Core of Preparation Example 2 | 50 | 35 | 15 | About 1.3 $\mu$m |
| Example 2 | Core of Preparation Example 3 | 50 | 35 | 15 | About 1.1 $\mu$m |
| Example 3 | Core of Preparation Example 4 | 50 | 35 | 15 | About 1.0 $\mu$m |
| Example 4 | Core of Preparation Example 5 | 100 | 0 | 0 | About 1.0 $\mu$m |
| Example 5 | Core of Preparation Example 5 | 66.7 | 33.3 | 0 | About 0.9 $\mu$m |
| Example 6 | Core of Preparation Example 5 | 50 | 50 | 0 | About 0.9 $\mu$m |
| Example 7 | Core of Preparation Example 5 | 33.3 | 66.7 | 0 | About 0.9 $\mu$m |
| Example 8 | Core of preparation example 5 | 50 | 35 | 15 | About 0.9 $\mu$m |
| Example 9 | Core of preparation example 5 | 50 | 25 | 25 | About 0.9 $\mu$m |
| Example 10 | Core of preparation example 5 | 50 | 15 | 35 | About 0.9 $\mu$m |

**Comparative Example 2. Manufacture of positive electrode active material**

A positive electrode active material was manufactured by performing the same method as in Example 8, except that a core including a compound represented by Chemical Formula 1, acetylene black, carbon nanotubes, and polyvinylpyrrolidone (PVP) were uniformly mixed and then calcined at 800±50°C for 5 minutes.

**Examples 11 to 20 and Comparative Examples 3 to 4. Manufacture of lithium secondary battery**

An N-methylpyrrolidone solvent was injected into a homo mixer, and 90 parts by weight of each positive electrode active material manufactured in Examples 1 to 10 and Comparative Examples 1 to 2, 5 parts by weight of carbon black as a conductive material, and 5 parts by weight of polyvinylidenefluoride (PVdF) as a binder were added respectively. Then, the mixture was mixed at 3,000rpm for 60 minutes to prepare a positive electrode slurry. An aluminum foil (average thickness: 12$\mu$m) was prepared as a positive electrode current collector, and the previously manufactured positive electrode slurry was cast on one side of the prepared aluminum foil. The aluminum foil with the positive electrode slurry cast on it was dried in a 130°C vacuum oven and then rolled to manufacture a positive electrode. Here, the total thickness of the rolled positive electrode active layer was 150$\mu$m, and the porosity was 25% to 35%.

A lithium metal disk was prepared as a negative electrode. The prepared negative electrode and the positive electrodes prepared in Examples 1 to 6 and Comparative Example 1 as shown in Table 3 below were placed facing each other, and a separator made of 18μm polypropylene was interposed between them to manufacture an electrode assembly. Each manufactured electrode assembly was inserted into a battery case, an electrolyte composition was injected into the battery case, and then the case was sealed to manufacture a half-cell. Here, as the electrolyte composition, a solution prepared by mixing lithium hexafluorophosphate (LiPF$_6$, 1.0M) in a mixture of ethylene carbonate (EC):ethyl methyl carbonate (EMC)=1:1 (volume ratio) was used.

[Table 3]

| | Types of applied positive electrode active material |
|---|---|
| Example 11 | Positive electrode active material prepared in Example 1 |
| Example 12 | Positive electrode active material prepared in Example 2 |
| Example 13 | Positive electrode active material prepared in Example 3 |
| Example 14 | Positive electrode active material prepared in Example 4 |
| Example 15 | Positive electrode active material prepared in Example 5 |
| Example 16 | Positive electrode active material prepared in Example 6 |
| Example 17 | Positive electrode active material prepared in Example 7 |
| Example 18 | Positive electrode active material prepared in Example 8 |
| Example 19 | Positive electrode active material prepared in Example 9 |
| Example 20 | Positive electrode active material prepared in Example 10 |
| Comparative example 3 | Positive electrode active material prepared in Comparative Example 1 |
| Comparative example 4 | Positive electrode active material prepared in Comparative Example 2 |

**Experimental Example.**

The following experiments were conducted to evaluate the performance of the positive electrode active material according to the present disclosure.

1) Output characteristics of lithium secondary Battery

For each half-cell manufactured in Examples 11 to 20 and Comparative Examples 3 to 4, constant current/constant voltage charging (CC/CV charge) was performed at a temperature of 25°C, followed by constant current discharging (CC discharge) to measure the initial discharge capacity. Here, the constant current/constant voltage charging was performed by constant current at 0.1C rate until the voltage reached 4.2V, followed by a constant voltage mode maintaining 4.2V until cut-off at 0.1C rate. Also, the constant current discharging was performed at 1.0C rate until reaching 1.5V.
Then, each half-cell was fully charged at 25°C with a charging current of 1.0C rate until the charging end voltage of 4.2V to 4.25V, and high-rate discharge capacity was measured while discharging in the range of 1.0 to 5.0C rate. The high-rate discharge characteristics of each lithium secondary battery were evaluated by calculating the relative discharge capacity ratio based on the initial discharge capacity for each discharge rate from the measured discharge capacity. The measured results are shown in Table 4.

2) High-temperature lifespan characteristics

The charge-discharge capacity retention rate under high-temperature conditions was measured for each half-cell manufactured in Examples 11 to 20 and Comparative Examples 3 to 4. Specifically, after setting one cycle as charging with a constant current of 1C at 45°C until the voltage becomes 4.25V, and discharging with a constant current of 1C until the voltage reaches 2.5V, 300 cycles of charge-discharge were performed for each half-cell.
Here, the charging capacity of the 1st cycle and the charging capacity of the 300th cycle during charge-discharge of each half-cell were measured. The high-temperature lifespan of each half-cell was evaluated by calculating the charging capacity retention rate of the 300th cycle based on the charging capacity of the 1st cycle. The results are shown in Table 4 below.

[Table 4]

| Unit: % | Relative discharge capacity ratio based on initial discharge capacity at different discharge rates | | | | 300th cycle capacity retention rate [%] |
|---|---|---|---|---|---|
| | 1C | 2C | 3C | 5C | |
| Example 11 | 93.8 | 83.8 | 79.9 | 73.2 | 81.1 |
| Example 12 | 94.3 | 84.2 | 80.9 | 74.8 | 81.6 |
| Example 13 | 94.8 | 85.0 | 81.5 | 75.3 | 82.1 |
| Example 14 | 94.9 | 86.2 | 81.9 | 76.1 | 84.2 |
| Example 15 | 95.9 | 87.6 | 82.0 | 76.8 | 84.8 |
| Example 16 | 95.1 | 87.3 | 81.8 | 76.5 | 83.7 |
| Example 17 | 95.4 | 86.7 | 81.2 | 76.0 | 83.0 |
| Example 18 | 96.0 | 88.6 | 83.5 | 78.1 | 86.9 |
| Example 19 | 95.8 | 88.4 | 82.9 | 77.8 | 85.1 |
| Example 20 | 95.8 | 87.8 | 82.1 | 77.2 | 86.2 |
| Comparative Example 3 | 92.2 | 83.1 | 77.3 | 71.7 | 78.4 |
| Comparative Example 4 | 90.5 | 81.4 | 74.3 | 68.7 | 71.2 |

As shown in Table 4 above, it can be seen that the positive electrode for lithium secondary batteries according to the present disclosure has excellent output performance and outstanding high-temperature lifespan characteristics.

Specifically, the half-cells including the positive electrodes of the examples, which have a carbon layer provided through chemical vapor deposition (CVD) on a core including a compound represented by Chemical Formula 1, showed a high discharge capacity ratio of about 73.0% or more even under high-rate conditions of 5C or higher, and it was confirmed that the capacity retention rate was about 80% or more even after 300 cycles of charge-discharge were performed under high-temperature conditions.

This means that when a carbon layer is formed through chemical vapor deposition (CVD) on a core during the manufacture of a positive electrode active material, a carbon layer with high crystallinity is uniformly formed on the core surface with high structural safety and large specific surface area, thereby improving the electrochemical performance and lifespan characteristics of the positive electrode active material.

From these results, it can be seen that the positive electrode active material according to the present disclosure and the positive electrode including the same have excellent output performance during charge-discharge and outstanding lifespan characteristics.

While the present disclosure has been described with reference to exemplary aspects thereof, it will be understood by those skilled in the art that various modifications and variations can be made therein without departing from the scope of the present disclosure as defined by the appended claims.

Therefore, the scope of the present disclosure should not be limited by the detailed description of the specification but should be determined by the appended claims.

**Claims**

1.    A positive electrode active material comprising:

a core comprising a compound represented by the following Chemical Formula 1, and
a carbon layer surrounding the core:

[Chemical Formula 1]                $Li_{1+a}Mn_{1-b-c}Fe_bM^1_cPO_4$

in the Chemical Formula 1,
$M^1$ is one or more selected from Ti, V, Zr, Sr, Sb, B, or Nb, and
a, b, and c are $-0.5 \leq a \leq 0.5$, $0.1 \leq b \leq 0.8$, $0.001 \leq c \leq 0.2$.

2. The positive electrode active material of claim 1, wherein the compound represented by the Chemical Formula 1 includes one or more of compound represented by Chemical Formula 2, Chemical Formula 3, Chemical Formula 4, or Chemical Formula 5:

[Chemical Formula 2]     $Li_{1+a}Mn_{1-b-x}Fe_bTi_xPO_4$

[Chemical Formula 3]     $Li_{1+a}Mn_{1-b-x-y}Fe_bTi_xV_yPO_4$

[Chemical Formula 4]     $Li_{1+a}Mn_{1-b-x-y-z}Fe_bTi_xV_yNb_zPO_4$

[Chemical Formula 5]     $Li_{1+a}Mn_{1-b-x-y-z}Fe_bTi_xZr_yNb_zPO_4$

in the Chemical Formula 2 to Chemical Formula 5,
a, b, x, y, and z are $-0.5 \leq a \leq 0.5$, $0.1 \leq b \leq 0.8$, $0 < x \leq 0.2$, $0 < y \leq 0.1$, $0 < z \leq 0.1$, provided that $0.001 \leq x+y \leq 0.2$ or $0.001 \leq x+y+z \leq 0.2$.

3. The positive electrode of claim 1, wherein, when the core is analyzed by X-ray diffraction, the lattice constant c is 4.69165 Å to 4.80 Å and satisfies the following Equation 1:

$$[\text{Equation 1}]$$

$$y = -px + q$$

in the Equation 1,

y represents the lattice constant c,

x represents $\sqrt{a^2 + b^2}$, wherein a and b are the lattice constants a and b, respectively,

p and q are $-0.08 \leq p \leq -0.07$ and $5 \leq q \leq 6$, respectively.

4. The positive electrode active material of claim 1, wherein an average particle diameter ($D_{50}$) of the positive electrode active material is $0.5\mu m$ to $10\mu m$.

5. The positive electrode active material of claim 1, wherein an average thickness of the carbon layer is 50 nm or less.

6. A method for manufacturing a positive electrode active material, comprising a step of:

forming a carbon layer on the surface of particles of a compound represented by the following Chemical Formula 1,
wherein the carbon layer is formed by chemical vapor deposition (CVD) under inactive gas conditions:

[Chemical Formula 1]     $Li_{1+a}Mn_{1-b-c}Fe_bM^1_cPO_4$

in the Chemical Formula 1,
$M^1$ is one or more selected from Ti, V, Zr, Sr, Sb, B, and or Nb, and
a, b, and c are $-0.5 \leq a \leq 0.5$, $0.1 \leq b \leq 0.8$, $0.001 \leq c \leq 0.2$.

7. The method for manufacturing the positive electrode active material of claim 6, wherein the chemical vapor deposition (CVD) uses, as a carbon source, one or more of a carbon structure comprising one or more of a dot-shaped carbon compound or a linear carbon compound; and a polymer compound.

8. The method for manufacturing the positive electrode active material of claim 7, wherein the dot-shaped carbon compound comprises one or more selected from acetylene black, channel black, furnace black, lamp black, thermal black, or graphene, and
wherein the linear carbon compound comprises one or more selected from carbon nanotube or carbon fiber.

9. The method for manufacturing the positive electrode active material of claim 7, wherein the polymer compound comprises one or more from polyvinylpyrrolidone (PVP), polyacrylonitrile (PAN), polypyrrole (PPy), polyvinyl alcohol (PVA), polyacrylic acid (PAA), polymethylacrylate (PMA), or poly(methyl methacrylate) (PMMA).

10. The method for manufacturing the positive electrode active material of claim 7, wherein the chemical vapor deposition (CVD) is performed in a temperature range of from 500°C to 1,500°C.

11. A positive electrode comprising:

a positive electrode current collector, and
a positive electrode active layer disposed on at least one side of the positive electrode current collector and comprising the positive electrode active material according to claim 1.

【FIG. 1】

## INTERNATIONAL SEARCH REPORT

| International application No. |
| --- |
| **PCT/KR2025/000471** |

**A.    CLASSIFICATION OF SUBJECT MATTER**

**H01M 4/36**(2006.01)i; **H01M 4/58**(2010.01)i; **H01M 4/136**(2010.01)i; **H01M 4/62**(2006.01)i; **C01B 25/45**(2006.01)i; **H01M 10/052**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/36(2006.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 망간철 인산화물(lithium manganese iron phosphate), 탄소 코팅층(carbon coating layer), 코어(core), 양극 활물질(positive electrode active material), 화학 기상 증착(CVD, chemical vapor deposition)

**C.    DOCUMENTS CONSIDERED TO BE RELEVANT**

| Category* | Citation of document, with indication, where appropriate, of the relevant passages | Relevant to claim No. |
| --- | --- | --- |
| X | WU, T. et al. V-insertion in Li(Fe,Mn)FePO4. Journal of Power Sources. 2018, vol. 383, pp. 133-143. See 2.1. Synthesis; 2.3. Electrochemical measurements and 3.1. Structure and morphology; table 1; and figures 1(d) and 2(c). | 1,3-5,11 |
| Y | | 2,6-10 |
| Y | KR 10-2023-0164581 A (RIVIAN IP HOLDINGS, LLC) 04 December 2023 (2023-12-04) See claims 1 and 2; and paragraph [0017]. | 2 |
| Y | YANG, L. et al. Constructing durable carbon layer on LiMn0.8Fe0.2PO4 with superior long-term cycling performance for lithium-ion battery. Electrochimica Acta. 2016, vol. 191, pp. 200-206. See abstract; and 2.1. Preparation Samples. | 6-10 |
| X | CN 115020678 A (ENVISION POWER TECHNOLOGY (JIANGSU) CO., LTD. et al.) 06 September 2022 (2022-09-06) See claims 1-7 and 9. | 1,4,5,11 |

☑ Further documents are listed in the continuation of Box C.            ☑ See patent family annex.

| | | |
| --- | --- | --- |
| *   Special categories of cited documents: | "T" | later document published after the international filing date or priority date and not in conflict with the application but cited to understand the principle or theory underlying the invention |
| "A"   document defining the general state of the art which is not considered to be of particular relevance | | |
| "D"   document cited by the applicant in the international application | "X" | document of particular relevance; the claimed invention cannot be considered novel or cannot be considered to involve an inventive step when the document is taken alone |
| "E"   earlier application or patent but published on or after the international filing date | | |
| "L"   document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"   document referring to an oral disclosure, use, exhibition or other means | | |
| "P"   document published prior to the international filing date but later than the priority date claimed | "&" | document member of the same patent family |

| Date of the actual completion of the international search | Date of mailing of the international search report |
| --- | --- |
| **11 April 2025** | **11 April 2025** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2025/000471**

## C.    DOCUMENTS CONSIDERED TO BE RELEVANT

| Category* | Citation of document, with indication, where appropriate, of the relevant passages | Relevant to claim No. |
|---|---|---|
| A | KR 10-1993030 B1 (DOW GLOBAL TECHNOLOGIES LLC) 25 June 2019 (2019-06-25)<br>See entire document. | 1-11 |

Form PCT/ISA/210 (second sheet) (July 2022)

## INTERNATIONAL SEARCH REPORT
### Information on patent family members

International application No.

**PCT/KR2025/000471**

| Patent document cited in search report | | | Publication date (day/month/year) | Patent family member(s) | | | Publication date (day/month/year) |
|---|---|---|---|---|---|---|---|
| KR | 10-2023-0164581 | A | 04 December 2023 | CN | 117133916 | A | 28 November 2023 |
| | | | | DE | 102023113326 | A1 | 30 November 2023 |
| | | | | US | 2023-0387404 | A1 | 30 November 2023 |
| CN | 115020678 | A | 06 September 2022 | CN | 115020678 | B | 14 June 2024 |
| KR | 10-1993030 | B1 | 25 June 2019 | CA | 2894494 | A1 | 26 June 2014 |
| | | | | CA | 2894545 | A1 | 26 June 2014 |
| | | | | CA | 2894545 | C | 31 May 2022 |
| | | | | CN | 104854739 | A | 19 August 2015 |
| | | | | CN | 104854739 | B | 20 July 2018 |
| | | | | CN | 104885268 | A | 02 September 2015 |
| | | | | CN | 104885268 | B | 28 September 2018 |
| | | | | EP | 2936590 | A1 | 28 October 2015 |
| | | | | EP | 2936590 | B1 | 29 June 2022 |
| | | | | EP | 2936590 | B8 | 14 September 2022 |
| | | | | EP | 2936592 | A1 | 28 October 2015 |
| | | | | EP | 2936592 | B1 | 09 August 2023 |
| | | | | ES | 2927465 | T3 | 07 November 2022 |
| | | | | ES | 2957469 | T3 | 19 January 2024 |
| | | | | HU | E063202 | T2 | 28 December 2023 |
| | | | | JP | 2016-507863 | A | 10 March 2016 |
| | | | | JP | 2016-507864 | A | 10 March 2016 |
| | | | | JP | 2018-060811 | A | 12 April 2018 |
| | | | | JP | 6326065 | B2 | 16 May 2018 |
| | | | | JP | 6531041 | B2 | 12 June 2019 |
| | | | | KR | 10-2015-0097528 | A | 26 August 2015 |
| | | | | KR | 10-2015-0099747 | A | 01 September 2015 |
| | | | | KR | 10-2157404 | B1 | 18 September 2020 |
| | | | | PL | 2936592 | T3 | 05 February 2024 |
| | | | | TW | 201427158 | A | 01 July 2014 |
| | | | | TW | I556498 | B | 01 November 2016 |
| | | | | US | 10205158 | B2 | 12 February 2019 |
| | | | | US | 2015-0311505 | A1 | 29 October 2015 |
| | | | | US | 2015-0311527 | A1 | 29 October 2015 |
| | | | | US | 2018-0040883 | A1 | 08 February 2018 |
| | | | | US | 9793538 | B2 | 17 October 2017 |
| | | | | US | 9960413 | B2 | 01 May 2018 |
| | | | | WO | 2014-098937 | A1 | 26 June 2014 |
| | | | | WO | 2014-100529 | A1 | 26 June 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240003890
- KR 1020130136796
- KR 1020160111213